# EUROPÄISCHE PATENTANMELDUNG

(11) **EP 4 484 189 A1**
(43) Veröffentlichungstag der Anmeldung: **01.01.2025**
(21) Anmeldenummer: 24185075.9
(22) Anmeldetag: 27.06.2024
(51) Int. Cl.: B60J 7/06

(54) **SCHIEBEABDECKUNG FÜR EINE DURCH EIN FALTBARES ODER ZUSAMMENSCHIEBBARES FLÄCHENELEMENT VERSCHLIESSBARE DACHÖFFNUNG**

(30) Priorität: 30.06.2023 DE 102023117332
(71) Anmelder: F. Hesterberg & Söhne GmbH & Co. KG, 44149 Dortmund (DE)
(72) Erfinder: Tiedtke, Henning, 58256 Ennepetal (DE)
(74) Vertreter: Janke Scholl Patentanwälte PartG mbB

(57) **Zusammenfassung**

Vorgeschlagen wird eine Schiebeabdeckung für eine durch ein Flächenelement verschließbare Dachöffnung eines Nutzfahrzeug-Laderaums, mit längs der beiden Seitenränder der Dachöffnung sich erstreckenden Längsholmen (1), mit mindestens einem das Flächenelement stützenden Querspriegel (2), der sich zwischen den Längsholmen (1) erstreckt und an jedem Ende mit einem Schlitten (4) versehen ist, der mittels an dem Schlitten (4) gelagerter Rollen (40, 60) an dem jeweiligen Längsholm (1) geführt ist, mit einem in dem Längsholm (1) ausgebildeten Führungskanal (63) für eine Seitenführungsrolle (60), und mit einer an dem Längsholm (1) ausgebildeten Lauffläche (35A) für eine weitere Rolle, die als Stützrolle (40) ausgebildet ist und im Vergleich zu der Seitenführungsrolle (60) weiter fahrzeuginnen angeordnet ist.

Damit sich in Höhe der Längsholme eine optimale Nutzung der maximal zur Verfügung stehenden Laderaumhöhe ergibt, wobei trotzdem das Öffnen und Schließen der Schiebeabdeckung leichtgängig und mit geringen Bedienkräften möglich sein soll, bildet den Grundkörper (3) des Schlittens (4) ein Profilelement, an dem eine sich längs des Längsholms (1) erstreckende Stufe (51) ausgebildet ist. An der Stufe (51) geht das Profilelement von einem höher gelegenen ersten Profilabschnitt (55A) in einen tiefer gelegenen zweiten Profilabschnitt (55B) über, an dem die Achse (61) der Seitenführungsrolle (60) befestigt ist. Die Stützrolle (40) ist neben der Stufe (51) unter dem ersten Profilabschnitt (55A) angeordnet, und auf einer Lauffläche (35A) an der Oberseite (35) des Längsholms (1) abgestützt.

## Beschreibung

Die Erfindung betrifft eine Schiebeabdeckung für eine durch ein faltbares oder zusammenschiebbares Flächenelement verschließbare Dachöffnung eines Nutzfahrzeug-Laderaums mit den Merkmalen des Oberbegriffs des Patentanspruchs 1.

Eine Schiebeabdeckung für einen Nutzfahrzeug-Laderaums mit diesen Merkmalen ist aus der EP 1 867 509 A2 bekannt. Längs der Seitenränder der verschließbaren Dachöffnung erstrecken sich Längsholme mit quadratischem und daher relativ voluminösem Holmquerschnitt. Querspriegel erstrecken sich zwischen den Längsholmen und sind an jedem Ende mit einem Schlitten versehen, der mittels daran gelagerter Laufrollen an dem Längsholm geführt ist. Führungskanäle in dem Längsholm sind dazu eingerichtet, die Laufrollen aufzunehmen und zu führen. Ein erster Führungskanal ist mit einer Öffnung in der Oberseite des Längsholms versehen. In diesem Führungskanal rollen Seitenführungsrollen mit vertikaler Rollenachse. Ein zweiter Führungskanal ist nach fahrzeuginnen hin offen. Darin rollen Stützrollen mit horizontaler Rollenachse. Die Stützrollen sind im Vergleich zu den Seitenführungsrollen weiter fahrzeuginnen angeordnet. Den Grundkörper des Schlittens bildet ein Profilelement aus Metallblech, an dem alle Rollenachsen befestigt sind.

Ähnliche Schiebeabdeckungen zeigen die EP 3 293 027 B1 und die WO 2006/105779 A2.

Aus der DE 10 2020 114 966 A1 ist eine Schiebeabdeckung für ein Nutzfahrzeug bekannt, bei der mit dem Ziel einer besonders kompakten Bauform der Längsholm mit nur einem Führungskanal versehen ist, und das Ende des Querspriegels mit nur zwei in dem Führungskanal laufenden Rollen auf vertikalen Rollenachsen. Der Führungskanal ist an drei Seiten geschlossen und weist nach oben eine schlitzartige Öffnung auf. Diese ist breiter als die Rollenachsen, aber schmaler als die Rollen selbst. Die Rollen sind spezielle Gleitrollen und weisen neben ihrem tonnenförmigen Rollenumfang eine Kreisfläche auf, mit der sie auf dem Boden des Führungskanals gleiten. Dadurch nehmen ein- und dieselben Rollen bei der Bewegung des Querspriegels sowohl die horizontalen als auch die vertikalen Kräfte auf.

Der Erfindung liegt die **Aufgabe** zugrunde, eine Schiebeabdeckung für eine durch ein Flächenelement verschließbare Dachöffnung eines Nutzfahrzeug-Laderaums zu schaffen, bei der die an der Schiebeführung beteiligten Elemente kompakt ausgebildet sind und sich in Höhe der Längsholme eine optimale Nutzung der maximal zur Verfügung stehenden Laderaumhöhe ergibt. Trotzdem soll das Öffnen und Schließen der Schiebeabdeckung leichtgängig und mit geringen Bedienkräften erfolgen.

Zur Lösung dieser Aufgabe wird eine Schiebeabdeckung für eine durch ein faltbares oder zusammenschiebbares Flächenelement verschließbare Dachöffnung eines Nutzfahrzeug-Laderaums mit den Merkmalen des Anspruchs 1 vorgeschlagen. Bestandteile dieser Schiebeabdeckung sind
- längs der beiden Seitenränder der Dachöffnung sich erstreckende Längsholme,
- mindestens ein das Flächenelement stützender Querspriegel, der sich zwischen den Längsholmen erstreckt und an jedem Ende mit einem Schlitten versehen ist, der mittels an dem Schlitten gelagerter Rollen an dem jeweiligen Längsholm geführt ist,
- ein in dem Längsholm ausgebildeter Führungskanal aus zwei einander gegenüberliegenden Laufflächen und einer dazwischen angeordneten Öffnung in der Oberseite des Längsholms, wobei sich durch die Öffnung die Achse einer Rolle erstreckt, die als Seitenführungsrolle ausgebildet ist,
- eine an dem Längsholm ausgebildete Lauffläche für eine weitere Rolle, die als Stützrolle mit horizontaler Rollenachse ausgebildet ist und im Vergleich zu der Seitenführungsrolle weiter fahrzeuginnen angeordnet ist.

Erfindungsgemäß bildet den Grundkörper des Schlittens ein Profilelement, an dem eine sich längs des Längsholms erstreckende Stufe ausgebildet ist, an welcher das Profilelement von einem höher gelegenen ersten Profilabschnitt, an dem der Querspriegel befestigt ist, in einen in einer tiefer gelegenen Ebene angeordneten zweiten Profilabschnitt übergeht, an dem die Achse der Seitenführungsrolle befestigt ist. Die Stützrolle ist neben der Stufe unter dem ersten Profilabschnitt angeordnet und auf einer Lauffläche an der Oberseite des Längsholms abgestützt.

Die Vorteile dieser Schiebeabdeckung bestehen darin, dass die an der Schiebeführung beteiligten Elemente kompakt ausgebildet sind, so dass sich in Höhe der Längsholme eine optimale Nutzung der maximal zur Verfügung stehenden Laderaumhöhe ergibt. Trotzdem ist sichergestellt, dass das Öffnen und Schließen der Schiebeabdeckung leichtgängig und mit geringen Bedienkräften erfolgen kann. Dies ist selbst dann der Fall, wenn sich der Querspriegel etwas durchbiegen sollte, etwa aufgrund zusätzlicher Gewichtslasten auf der Abdeckung aufgrund starker Nässe oder aufgrund von Schneelasten. Ursächlich für eine Schwergängigkeit und dadurch erhöhte Bedienkräfte kann auch sein, dass Bauteile der Schiebeabdeckung beschädigt oder infolge zu starker Kräfte dauerhaft verformt sind.

Bevorzugte Ausgestaltungen der Schiebeabdeckung sind in der Unteransprüchen angegeben.

Von Vorteil ist, wenn das den Schlittengrundkörper bildende Profilelement mit einer vertikalen Einsenkung von einer solchen Größe versehen ist, dass bei geschlossener Schiebeabdeckung diese Einsenkung Platz für solche Bauteile der Schiebeabdeckung bietet, die sonst nach oben vorstehen würden. An dem Profilelement kann daher eine weitere Stufe ausgebildet sein, an der das Profilelement von dem tiefer gelegenen, zweiten Profilabschnitt erneut in einen wieder höher gelegenen, dritten Profilabschnitt übergeht, wodurch die beiden Stufen gemeinsam mit dem tiefer gelegenen, zweiten Profilabschnitt einen nach oben offenen Kanal bilden. Für eine kompakte Bauform befindet sich der Kanal vollständig und mit seiner gesamten Breite über dem Längsholm.

Der Kanal bzw. die Einsenkung bietet Platz für ein zum Öffnen der Schiebeabdeckung aufstellbares Hubelement, welches, gegebenenfalls gemeinsam mit anderen Hubelementen, das Flächenelement stützt. Das Hubelement ist in einem Schwenklager mit dem Schlitten verbunden, wobei sich das Schwenklager an den Stufen befindet.

Zur Ausbildung des Schwenklagers können die Stufen in ihren vertikalen Bereichen mit Öffnungen versehen sein, in die Gelenkzapfen des Hubelements greifen. Vorzugsweise sind die Öffnungen in den beiden Stufen axial zueinander fluchtend angeordnet.

Vorzugsweise befindet sich das Hubelement vollständig über dem Längsholm und ist in abgesenkter Stellung in den Kanal abgesenkt. Erreicht wird eine kompakte Bauform, da sich das Hubelement nicht seitlich neben, sondern vollständig über dem Längsholm befindet. In abgesenkter Stellung des Hubelements ist dieses platzsparend in den Kanal abgesenkt.

Hinsichtlich des Hubelements wird ferner vorgeschlagen, dass dieses zusammen mit einem zweiten Hubelement ein gelenkig gegeneinander aufstellbares Stützenpaar für das Flächenelement bildet.

Eine Schiebeabdeckung lässt sich zwar grundsätzlich allein mit Gleitelementen realisieren. Die Bedienkräfte beim Öffnen und Schließen der Laderaumabdeckung sind dann allerdings hoch und dies vor allem dann, wenn auf der Laderaumabdeckung zusätzliches Gewicht lastet, etwa starke Nässe oder Schneelast. Die Bedienkräfte nehmen auch dann stark zu, wenn einzelne Bauteile der Abdeckung beschädigt oder infolge zu starker Kräfte verzogen sind.

Daher wird eine reine Rollenkonstruktion bevorzugt und insbesondere vorgeschlagen, dass sich die Stützrolle an einem der Fahrzeugmitte zugewandten, freien Ende ihrer Rollenachse befindet. Vorzugsweise ist die Stützrolle nach oben hin ausschließlich durch den ersten Profilabschnitt überdeckt.

Hinsichtlich der Ausgestaltung der Längsholme wird vorgeschlagen, dass diese jeweils von L-förmigem Querschnitt sind mit einem vertikalen ersten Schenkel, welcher sich entlang der Seite des Nutzfahrzeug-Laderaums erstreckt, und einem die Dachöffnung seitlich begrenzenden zweiten Schenkel, wobei der zweite Schenkel als eine Doppelwand aus einer oberen und einer unteren Wand gestaltet ist, sich an der oberen Wand die Lauffläche der Stützrolle befindet, und beide Wände gemeinsam eine Nut begrenzen, die zu dem Querspriegel hin offen ist.

Eine Ausgestaltung der Längsholme sieht vor, dass sich die Lauffläche für die Stützrolle am Boden einer gegenüber der übrigen Oberseite des Längsholms abgesenkten Vertiefung befindet. Diese Vertiefung schafft die Möglichkeit dafür, dass die Seitenführungsrolle und die weiter fahrzeuginnen angeordnete Stützrolle gleiche Rollenkörper aufweisen.

Für eine verbesserte und vor allem leichtgängigere Führung während des Öffnens und Schließens ist der Schlitten vorzugsweise mit insgesamt zwei Seitenführungsrollen versehen, die beide in dem Führungskanal laufen, und dies mit möglichst großem Abstand zueinander.

Weitere Vorteile und Einzelheiten ergeben sich aus der nachfolgenden Beschreibung, für die auf die Zeichnung Bezug genommen wird. Darin zeigen:
- Fig. 1: ein Nutzfahrzeug mit einer Schiebeabdeckung, die längs zweier Längsholme des Nutzfahrzeugaufbaus verschiebbar ist (Fig. 1 aus 20 094);
- Fig. 2a: eine perspektivische Teilansicht der Schiebeabdeckung in teilweise geöffnetem Zustand, ohne Wiedergabe des faltbaren Flächenelements (Fig. 2a aus 20 094);
- Fig. 3: in einer ersten Ausführungsform einen Querschnitt durch einen der Längsholme einschließlich eines an dem Längsholm rollbaren Schlittens und des einen Endes eines Querspriegels, der zwei Schlitten miteinander verbindet;
- Fig. 4: die Gegenstände der Fig. 3 in einer zweiten Ausführungsform.

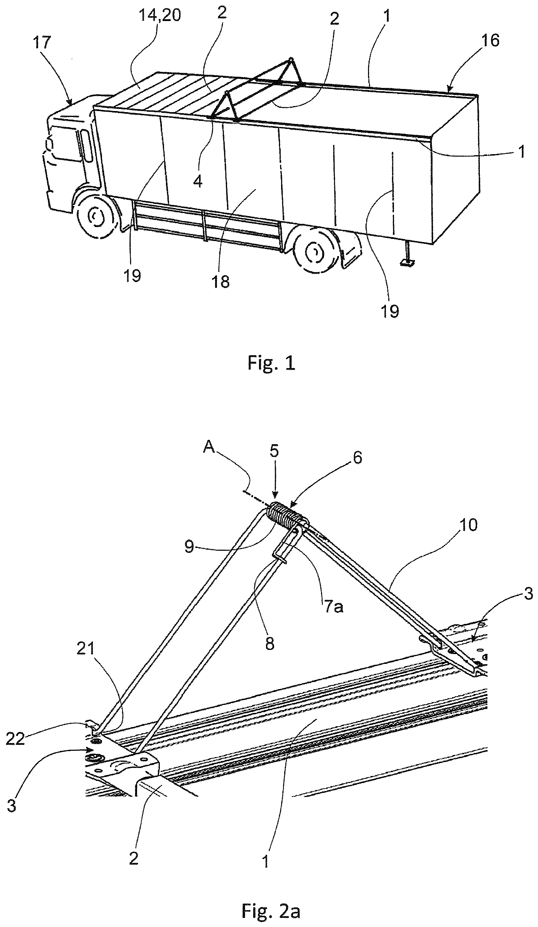

Fig. 1 zeigt einen Nutzfahrzeugaufbau 16 und eine Fahrerkabine 17 eines Nutzfahrzeugs. Der Nutzfahrzeugaufbau 16 kann z. B. auch Bestandteil eines Sattelaufliegers sein, der auf einem Zugfahrzeug abgestützt ist. Dargestellt ist ein sogenannter Curtainsider, bei dem beidseitig vorhandene, flexible Seitenplanen 18 mitsamt den mit den Seitenplanen 18 verbundenen Rungen 19 nach vorne oder nach hinten verschoben werden können, um so große Seitenöffnungen zu schaffen. Die Rungen 19 verbinden den Boden des Nutzfahrzeugaufbaus 16 mit Längsholmen 1, die sich beidseits entlang des Dachs 14 des Nutzfahrzeugaufbaus 16 erstrecken. Die Konstruktion aus den linken und rechten Längsholmen 1 und den Rungen 19 hält die Seitenplanen 18 und bildet zusammen mit dem Laderaumboden die tragende Struktur.

Die beiden Längsholme 1 sind zur Fahrzeugmitte symmetrisch angeordnet und gestaltet. An ihnen sind alle Elemente des Dachs 14 befestigt. Das Dach 14 ist nicht starr, sondern setzt sich u. a. aus aufeinanderfolgenden, klappbaren Elementen zusammen. Insbesondere ist das Dach 14 ein Falt- oder Schiebeverdeck, dessen oberen Abschluss und Abdeckung eine biegsame Plane bildet, die als Flächenelement 20 dient. Die Plane bzw. das Flächenelement 20 lässt sich zum Öffnen des Dachs kontrolliert falten und dadurch in Fahrzeuglängsrichtung verkürzen, um so eine lange Dachöffnung zwischen den Längsholmen 1 zu schaffen, die das Be- und Entladen des Laderaums von oben her ermöglicht.

Das Flächenelement 20 liegt auf Querspriegeln 2 auf und ist an diesen auch befestigt. Die Querspriegel 2 erstrecken sich nach Art von Traversen zwischen dem linken Längsholm 1 und dem rechten Längsholm 1 und sind entlang der Längsholme 1 verfahrbar. Über die Länge des Dachs ist eine Vielzahl der Querspriegel 2 vorhanden, um so das Flächenelement 20 wirksam z. B. gegenüber Schneelasten zu stützen. Die Querspriegel 2 können von einheitlichem Bautyp oder auch von unterschiedlichen Bautypen sein.

Der einzelne Querspriegel 2 ist an jedem seiner beiden Enden starr mit einem rollbaren Schlitten 4 verbunden. An dem Schlitten 4 sind teils seitlich führende und teils stützende Rollen gelagert, um so die Schlitten und damit den Querspriegel 2 widerstandsarm entlang der Längsholme 1 in Fahrzeuglängsrichtung verschieben zu können.

Die Figur 2a zeigt einen perspektivischen Teilausschnitt der Schiebeabdeckung, allerdings der besseren Darstellbarkeit wegen ohne die Plane bzw. das flexible Flächenelement 20. Das Flächenelement ist nicht nur an dem Querspriegel 2 befestigt, sondern auch an Hubelementen 10. Insbesondere zeigt Fig. 2a, dass zwischen aufeinanderfolgenden Schlitten 4 die Hubelemente 10 paarweise angeordnet sind.

Die Hubelemente 10 sind beim Ausführungsbeispiel Hubbügel aus Draht. Die zwei Hubbügel jedes Paars sind gegeneinander aufstellbar und an ihren schlittenseitigen Enden mit Gelenkzapfen 21 versehen. Die Gelenkzapfen 21 sind von solcher Länge, dass sie in komplementäre Öffnungen 22 in dem Grundkörper 3 des jeweiligen Schlittens 4 greifen. Die Gelenkzapfen 21 bilden zusammen mit den Öffnungen 22 eine horizontale Schwenkachse, welche den Hubbügel 10 schwenkbeweglich an dem Schlitten 4 lagert.

Die anderen, aufstellbaren Enden der zwei Hubbügel sind in einer Gelenkverbindung 5 auf der Gelenkachse A verbunden. Um die Gelenkverbindung 5 erstreckt sich ein Federelement 6, welches sich mit einem ersten Federende 7a unter Ausübung einer nach unten gerichteten Kraft an dem hubseitigen Ende des ersten Hubbügels des Paars, und mit einem zweiten Federende unter Ausübung einer nach unten gerichteten Kraft an dem hubseitigen Ende des zweiten Hubbügels des Paars abstützt. Die Kraftausübung findet also an den zwei Federenden 7a statt, an denen jeweils Haken 8 ausgebildet sind, die in den jeweiligen Hubbügel 10 eingehängt sind. Zwischen den Federenden 7a ist ein Mittelabschnitt 9 des Federelements 6 angeordnet, welcher als Schraubenfeder um die Gelenkachse Ader Gelenkverbindung 5 führt. Die beiden Hubelemente 10 des Paars sind also in der gemeinsamen Gelenkverbindung 5 gelagert und unterliegen dabei einer Stellkraft in Aufstellrichtung.

Die Fig. 2a zeigt die Situation bei schon teilweise geöffneter Schiebeabdeckung. Die zwei Hubbügel 10 sind hierbei statteldachförmig gegeneinander aufgestellt, unter deutlichem Anheben der Gelenkverbindungen 5 von den Längsholmen 1. In dieser Situation ist das Federelement 6 bereits weitgehend entspannt. Das dann noch weitere Aufschieben des Dachs erfordert dann keinen größeren Kraftaufwand mehr. In dem Federelement 6 ist also durch die Verformung potentielle Energie gespeichert, die bei einem Öffnungsvorgang freigesetzt wird und die Hubelemente aufstellt.

Für eine kompakte Bauform befinden sich die Hubelemente 10 nicht neben, sondern mit ihrer gesamten Breite vollständig über dem Längsholm 1 und hier insbesondere einem die Dachöffnung seitlich begrenzenden, horizontalen Schenkel 32 des Längsholms. Dadurch wird erreicht, dass bei geschlossener Schiebeabdeckung die Hubelemente 10 mit einem Teil ihrer Länge auf dem Schlitten 4 aufliegen und sie sich mit einem anderen Teil ihrer Länge über dem Abschnitt des Längsholms 1 zwischen aufeinander folgenden Schlitten 4 befinden.

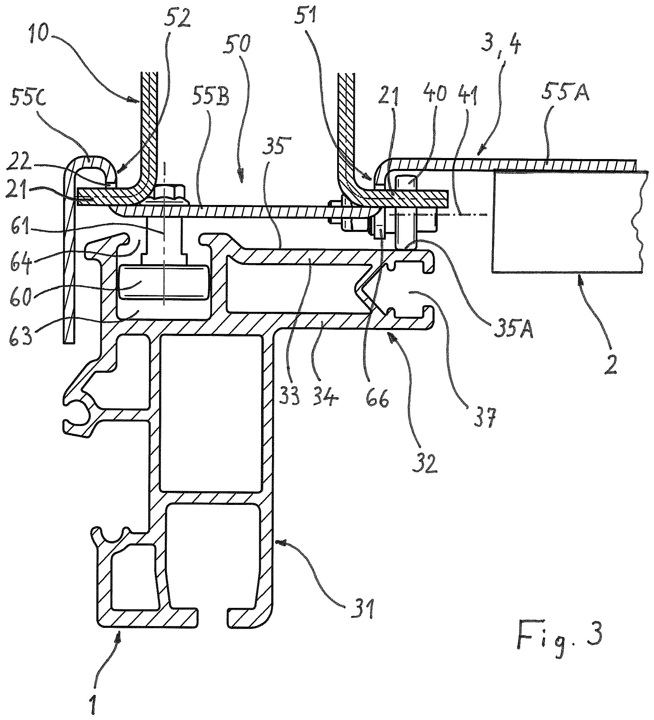

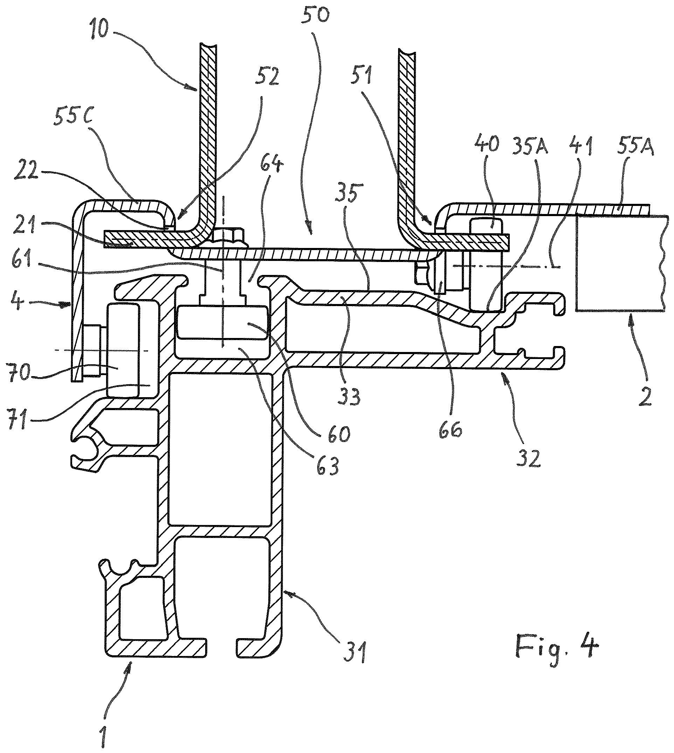

Die beiden Längsholme, von denen in Fig. 3 und Fig. 4 jeweils nur ein Längsholm 1 dargestellt ist, sind extrudierte Metallprofile von L-förmigem Querschnitt mit einem vertikalen ersten Schenkel 31, welcher sich entlang der Seite des Nutzfahrzeug-Laderaums erstreckt und auf den Rungen 19 abgestützt ist, und mit dem horizontalen Schenkel 32, welcher die Dachöffnung seitlich begrenzt. Ebenso wie der erste Schenkel 31 ist auch der zweite Schenkel 32 als eine Doppelwand gestaltet. Er besteht aus einer oberen Wand 33 und einer unteren Wand 34. Gemeinsam begrenzen die beiden Wände 33, 34 eine zu dem Querspriegel 2 hin offene Nut 37, die von Nutzen für vielfältige Anwendungen ist. Zum Beispiel kann die Nut 37 Röllchen oder Gleitelemente aufnehmen und längs des Längsholms führen, die Bestandteil von Maßnahmen der Ladungssicherung sind.

Nur an der oberen Wand 33, deren Oberseite zugleich die Oberseite 35 des Längsholms 1 bildet, befindet sich eine Lauffläche 35A für eine an dem Schlitten 4 drehbar gelagerte Rolle. Diese Rolle ist eine Stützrolle 40 mit horizontaler Rollenachse 41, die sich quer zur Fahrzeuglängsrichtung erstreckt.

Den Grundkörper 3 des Schlittens 4 bildet ein Profilelement. Das Profilelement ist vorzugsweise ein durch Verformung gestaltetes Metallblech, an dem unter anderem eine Einsenkung in Gestalt eines nach oben offenen Kanals 50 ausgebildet ist. Der Kanal 50 erstreckt sich in Längsrichtung des Längsholms 1 und befindet sich vollständig, also mit seiner gesamten Breite, über dem zweiten Schenkel 32 des Längsholms 1. Begrenzt ist der Kanal 50 durch seinen flachen Kanalboden, eine den Kanal nach fahrzeuginnen begrenzende erste Stufe 51 und eine den Kanal nach fahrzeugaußen begrenzende zweite Stufe 52. Breite und Höhe des Kanals 50 sind so bemessen, dass bei verschlossener Dachöffnung und damit in der vollständig abgesenkten Stellung des Hubelements 10 das Hubelement 10 bis in den Kanal abgesenkt ist und dadurch keine zusätzliche Bauhöhe beansprucht.

Zur Erzielung des Kanals 50 ist an dem Profilelement erstens die erste Stufe 51 vorhanden, an der der Grundkörper 3 von einem höher gelegenen ersten Profilabschnitt 55A, an dem der Querspriegel 2 starr befestigt ist, in einen in einer tiefer gelegenen Ebene angeordneten zweiten Profilabschnitt 55B übergeht. Dieser zweite Profilabschnitt 55B ist der Boden des Kanals 50. Zur Erzielung des Kanals 50 ist ferner die weitere Stufe 52 vorhanden, an der der Grundkörper 3 von dem tiefer gelegenen, zweiten Profilabschnitt 55B erneut in einen höher gelegenen dritten Profilabschnitt 55C übergeht. Der erste und der dritte Profilabschnitt 55A, 55C befinden sich vorzugsweise in derselben horizontalen Ebene.

In den vertikalen Bereichen der Stufen 51, 52 befinden sich die Öffnungen 22, die, wie bereits beschrieben, Teil des Schwenklagers des Hubelements 10 sind. Die Öffnungen 22 in einerseits der Stufe 51 und anderseits der Stufe 52 fluchten horizontal, und sind vorzugsweise Bohrungen.

Der Querspriegel 2 ist mittels Rollen 40, 60 die an dem Schlittengrundkörper 3 frei drehbar gelagert sind, an dem Längsholm 1 geführt.

Für die seitliche Führung des Schlittens 4 ist in dem Längsholm 1 ein Führungskanal 63 aus zwei einander gegenüberliegenden Laufflächen und einer dazwischen angeordneten Öffnung 64 in der Oberseite 35 des Längsholms 1 ausgebildet. Durch die Öffnung 64 erstreckt sich die vertikale Achse 61 einer an den Laufflächen abgestützten Rolle 60. Die Öffnung 64 kann verengt sein, wie dies die Fig. 3 zeigt, oder kann sich über die ganze Breite des Führungskanals 63 erstrecken.

Die Rolle 60 dient als Seitenführungsrolle, denn sie führt den Schlitten 4 primär in seitlicher Richtung. Die Achse 61 der Rolle 60 ist an dem zweiten Profilabschnitt 55B und damit an dem Boden des Kanals 50 befestigt. Für eine nochmals verbesserte Führung sind insgesamt zwei solcher Seitenführungsrollen 60 vorhanden, die mit möglichst großem Abstand zueinander beide in dem Führungskanal 63 laufen.

Für die vertikale Abstützung von Schlitten 4 und Querspriegel 2 hingegen ist vor allem die Stützrolle 40 mit ihrer im Wesentlichen horizontalen Rollenachse 41 vorhanden. Die Stützrolle 40 rollt reibungsarm auf der Lauffläche 35A an der Oberseite 35 ab und sie ist, für eine optimale Abstützung und Leichtgängigkeit auch im Fall von Gewichtslasten, die auf die Abdeckung und damit auf den Querspriegel 2 wirken, im Vergleich zu den Seitenführungsrollen 60 weiter fahrzeuginnen angeordnet, also näher zu dem Querspriegel 2.

Für eine noch präzisere und verwindungssteifere Abstützung können natürlich auch zwei solche Stützrollen 40 Verwendung finden, die dann beide auf der Lauffläche 35A abrollen.

Die Rollenachse 41 der oder jeder Stützrolle 40 ist an einer Lasche 66 befestigt. Die Lasche 66 ist ein Teilabschnitt der ersten Stufe 51 und ist nach unten zu dem Längsholm 1 gerichtet, wobei das freie Ende der Lasche 66 nur einen geringen vertikalen Abstand zu der Oberseite 35 des Längsholms hat. Vorzugsweise ist die Rollenachse 41 der Stützrolle 40 ist in einer Öffnung der Lasche 66 verankert, und erstreckt sich in etwa in derselben Ebene wie der zweite Profilabschnitt 55B. Geformt wird die Lasche 66 bei der Umformung des Metallblechs, aus dem der Schlittenkörper 3 besteht.

Die Variante Fig. 4 unterscheidet sich von der Variante Fig. 3 darin, dass sich die Lauffläche 35A für die Stützrolle 40 am Boden einer Vertiefung befindet, die gegenüber der übrigen Oberseite 35 des Längsholms 1 etwas abgesenkt ist. Diese Maßnahme ermöglicht eine Produktvereinheitlichung und damit Kostensenkung, da Platz geschaffen wird, damit für die Seitenführungsrollen 60 und die weiter fahrzeuginnen angeordnete Stützrolle 40 gleich dimensionierte Rollenkörper zum Einsatz kommen können.

Außerdem sind bei der Variante Fig. 4 noch weitere Rollen 70 mit horizontaler Rollenachse vorhanden, die in einem Führungskanal 71 in der Außenseite des vertikalen Schenkels 31 des Längsholms 1 laufen.

### Bezugszeichen

- 1: Längsholm
- 2: Querspriegel
- 3: Grundkörper
- 4: Schlitten
- 5: Gelenkverbindung
- 6: Federelement
- 7a: Federende
- 8: Haken
- 9: Mittelabschnitt
- 14: Dach
- 16: Nutzfahrzeugaufbau
- 17: Fahrerkabine
- 18: Seitenplane
- 19: Runge
- 20: Flächenelement
- 21: Gelenkzapfen
- 22: Öffnung
- 31: erster Schenkel
- 32: zweiter Schenkel
- 33: obere Wand
- 34: untere Wand
- 35: Oberseite
- 35A: Lauffläche
- 37: Nut
- 40: Stützrolle
- 41: Rollenachse
- 50: Kanal
- 51: erste Stufe
- 52: zweite Stufe
- 55A: erster Profilabschnitt
- 55B: zweiter Profilabschnitt
- 55C: dritter Profilabschnitt
- 60: Rolle, Seitenführungsrolle
- 61: Achse
- 63: Führungskanal
- 64: Öffnung
- 66: Lasche
- 70: Rolle
- 71: Führungskanal

- A: Gelenkachse

## Patentansprüche

1. Schiebeabdeckung für eine durch ein faltbares oder zusammenschiebbares Flächenelement (20) verschließbare Dachöffnung eines Nutzfahrzeug-Laderaums, mit
- längs der beiden Seitenränder der Dachöffnung sich erstreckenden Längsholmen (1),
- mindestens einem das Flächenelement (20) stützenden Querspriegel (2), der sich zwischen den Längsholmen (1) erstreckt und an jedem Ende mit einem Schlitten (4) versehen ist, der mittels an dem Schlitten (4) gelagerter Rollen (40, 60, 70) an dem jeweiligen Längsholm (1) geführt ist,
- einem in dem Längsholm (1) ausgebildeten Führungskanal (63) aus zwei einander gegenüberliegenden Laufflächen und einer dazwischen angeordneten Öffnung (64) in der Oberseite (35) des Längsholms (1), wobei sich durch die Öffnung (64) die Achse (61) einer Rolle erstreckt, die als Seitenführungsrolle (60) ausgebildet ist,
- einer an dem Längsholm (1) ausgebildeten Lauffläche für eine weitere Rolle, die als Stützrolle (40) mit horizontaler Rollenachse (41) ausgebildet ist und im Vergleich zu der Seitenführungsrolle (60) weiter fahrzeuginnen angeordnet ist,
**dadurch gekennzeichnet, dass** den Grundkörper (3) des Schlittens (4) ein Profilelement bildet, an dem eine sich längs des Längsholms (1) erstreckende Stufe (51) ausgebildet ist, an welcher das Profilelement von einem höher gelegenen ersten Profilabschnitt (55A), an dem der Querspriegel (2) befestigt ist, in einen in einer tiefer gelegenen Ebene angeordneten zweiten Profilabschnitt (55B) übergeht, an dem die Achse (61) der Seitenführungsrolle (60) befestigt ist, und dass die Stützrolle (40) neben der Stufe (51) unter dem ersten Profilabschnitt (55A) angeordnet, und auf einer Lauffläche (35A) an der Oberseite (35) des Längsholms (1) abgestützt ist.

2. Schiebeabdeckung nach Anspruch 1, **dadurch gekennzeichnet, dass** an dem Profilelement eine weitere Stufe (52) ausgebildet ist, an welcher das Profilelement von dem tiefer gelegenen, zweiten Profilabschnitt (55B) in einen höher gelegenen dritten Profilabschnitt (55C) übergeht, wobei die beiden Stufen (51, 52) und der tiefer gelegene zweite Profilabschnitt (55B) gemeinsam einen nach oben offenen Kanal (50) bilden.

3. Schiebeabdeckung nach Anspruch 2, **dadurch gekennzeichnet, dass** sich der Kanal (50) vollständig und mit seiner gesamten Breite über dem Längsholm befindet.

4. Schiebeabdeckung nach einem der Ansprüche 1 - 3, **gekennzeichnet durch** ein aufstellbares Hubelement (10), welches das Flächenelement (20) stützt und in einem Schwenklager mit dem Schlitten (4) verbunden ist, wobei sich das Schwenklager an den Stufen (51, 52) befindet.

5. Schiebeabdeckung nach Anspruch 4, **dadurch gekennzeichnet, dass** die Stufen (51, 52) in ihren vertikalen Bereichen mit Öffnungen (22) versehen sind, in die Gelenkzapfen (21) des Hubelements (10) greifen und so das Schwenklager bilden.

6. Schiebeabdeckung nach Anspruch 4 oder 5, **dadurch gekennzeichnet, dass** sich das Hubelement (10) vollständig über dem Längsholm (1) befindet.

7. Schiebeabdeckung nach einem der Ansprüche 4 - 6, **dadurch gekennzeichnet, dass** das Hubelement (10) in abgesenkter Stellung in den Kanal (50) abgesenkt ist.

8. Schiebeabdeckung nach einem der Ansprüche 4 - 7, **dadurch gekennzeichnet, dass** das Hubelement (10) zusammen mit einem zweiten Hubelement (10) ein gelenkig gegeneinander aufstellbares Stützenpaar für das Flächenelement (20) bildet.

9. Schiebeabdeckung nach einem der vorherigen Ansprüche, **dadurch gekennzeichnet, dass** sich die Stützrolle (40) an einem der Fahrzeugmitte zugewandten, freien Ende ihrer Rollenachse (41) befindet.

10. Schiebeabdeckung nach einem der vorherigen Ansprüche, **dadurch gekennzeichnet, dass** die Stützrolle (40) nach oben ausschließlich durch den ersten Profilabschnitt (55A) überdeckt ist.

11. Schiebeabdeckung nach einem der vorherigen Ansprüche, **dadurch gekennzeichnet, dass** die Längsholme (1) jeweils von L-förmigem Querschnitt sind mit einem vertikalen ersten Schenkel (31), welcher sich entlang der Seite des Nutzfahrzeug-Laderaums erstreckt, und einem die Dachöffnung seitlich begrenzenden zweiten Schenkel (32), wobei der zweite Schenkel (32) als eine Doppelwand aus einer oberen (33) und einer unteren (34) Wand gestaltet ist, sich an der oberen Wand (33) die Lauffläche (35A) der Stützrolle (40) befindet, und beide Wände (33, 34) gemeinsam eine Nut (37) begrenzen, die zu dem Querspriegel (2) hin offen ist.

12. Schiebeabdeckung nach einem der vorherigen Ansprüche, **dadurch gekennzeichnet, dass** sich die Lauffläche (35A) am Boden einer gegenüber der übrigen Oberseite (35) des Längsholms (1) abgesenkten Vertiefung befindet.

13. Schiebeabdeckung nach einem der vorherigen Ansprüche, **dadurch gekennzeichnet, dass** die Seitenführungsrolle (60) und die weiter fahrzeuginnen angeordnete Stützrolle (40) gleiche Rollenkörper aufweisen.

14. Schiebeabdeckung nach einem der vorherigen Ansprüche, **dadurch gekennzeichnet, dass** der Schlitten (4) mit insgesamt zwei Seitenführungsrollen (60) versehen ist, die beide in dem Führungskanal (63) laufen.
